Europäisches Patentamt

European Patent Office

Office européen des brevets

(19)

(11) Publication number: 0 349 216

A1

(12) EUROPEAN PATENT APPLICATION

(21) Application number: 89306389.1

(22) Date of filing: 23.06.89

(51) Int. Cl.4: C09J 7/02 , C09J 133/08 , C09J 151/04

(30) Priority: 28.06.88 US 210713

(43) Date of publication of application:
03.01.90 Bulletin 90/01

(84) Designated Contracting States:
BE DE ES FR GB IT SE

(71) Applicant: MINNESOTA MINING AND
MANUFACTURING COMPANY
3M Center, P.O. Box 33427
St. Paul, Minnesota 55133(US)

(72) Inventor: Purgett, Mark D. c/o Minnesota
Mining and
Manufacturing Co. P.O. Box 33427
St. Paul Minnesota 55133-3427(US)
Inventor: Kinning, David J. c/o Minnesota
Mining and
Manufacturing Co. P.O. Box 33427
St. Paul Minnesota 55133-3427(US)
Inventor: Smolders, Robert R.L. c/o Minnesota
Mining and
Manufacturing Company P.O. Box 33427
St. Paul, Minnesota 55133-3427(US)
Inventor: Bogaert, Yvan A. c/o Minnesota
Mining and
Manufacturing Company P.O. Box 33427
St.Paul, Minnesota 55133-3427(US)
Inventor: Everaerts, Albert I. c/o Minnesota
Mining and
Manufacturing Company c/o P.O. Box 33427
St. Paul, Minnesota 55133-3427(US)

(74) Representative: Baillie, Iain Cameron et al
c/o Ladas & Parry Isartorplatz 5
D-8000 München 2(DE)

(54) Pressure-sensitive adhesive.

(57) The present invention provides an acrylate pressure-sensitive adhesive tape having improved adhesion to painted surfaces and low temperature performance. The tapes include an adhesive layer containing a phase-separated ultraviolet-radiation polymerized pressure-sensitive adhesive wherein the first phase contains an acrylic copolymer, and the second phase contains a hydrocarbon elastomer or blend of hydrocarbon elastomers, each of the elastomers containing at least one unsaturated segment having a glass transition temperature lower than that of the acrylic copolymer, the elastomer phase being a continuous phase.

# PRESSURE SENSITIVE ADHESIVE

## Background of the Invention

### Field of the Invention

This invention relates to pressure-sensitive adhesive compositions and adhesive tapes, specifically acrylic-based pressure-sensitive adhesives having improved adhesion to paint and low temperature performance.

### Description of the Related Art

Acrylate pressure-sensitive adhesives are well known in the art. In U.S. Patent No. Re 24,906 (Ulrich), alkyl acrylate copolymers are described which are predominately alkyl esters of acrylic acid having from 4 to 14 carbon atoms, and further comprise a minor amount (3-12%, preferably 4-8%) of a polar copolymerizable monomer such as acrylic acid. Such adhesives are widely popular as they are readily available and provide a good balance of tack, shear and peel properties on a variety of substrates at a relatively low cost.

These adhesives have been used for various automotive applications, e.g., attachment of decorative items to the painted surface. Automotive industry testing of adhesives typically subjects adhesives to a shock test, known in the industry as a "cold slam" test, at temperatures down to -45° C. These conventional acrylate adhesives have difficulty performing well on such tests, especially at the lower temperatures on new high solids paints systems which are increasingly used in the automotive industry. Adhesion to such paints is also more difficult than adhesion to older paints.

U.S. Patent No. 4,181,752 (Martens et al.) discloses a process for ultraviolet photopolymerization of alkyl acrylate esters and polar copolymerizable monomers to form the acrylate copolymer. Martens teaches that intensity and spectral distribution of the irradiation must be controlled in order to attain desirable cohesive strengths and peel resistance. The photopolymerization is preferably carried out in an inert atmosphere as oxygen tends to inhibit the reaction. Adhesive properties for tapes made via the Martens process are improved over those made by solution polymerization, but still do not perform adequately on the automotive testing at the lowest temperatures.

Additional patents disclose ultraviolet radiation of acrylate adhesives. U.S. Patent No. 4,364,972 (Moon) discloses the use of N-vinylpyrrolidone as the polar copolymerizable monomer in the acrylate adhesive copolymer. High adhesion to automotive paints is disclosed but not exemplified. U.S. Patent No. 4,391,687 (Vesley) discloses the use of specific chromophore-substituted-halomethyl-s-triazines as photoactive cross-slinkers for acrylate copolymers. U.S. Patent No. 4,599,265 (Esmay) discloses a readily peelable pressure-sensitive adhesive tape, the adhesive layer of which is highly crosslinked and low in polar monomer content. While properties vary, none of these adhesives show improvements at the lowest temperatures on the automotive testing.

U.S. Patent No. 4,243,500 (Glennon) discloses a pressure-sensitive adhesive formed from a composition comprising at least one monofunctional unsaturated acrylate ester monomer, saturated tackifying resin polymers, non-crystallizing elastomeric material, and an initiator responsive to ultraviolet light or other penetrating radiation. Glennon specifies the use of UV light within a wavelength range of 1800-4000 Angstroms. The intensity of the lamps to which the adhesive is exposed is much higher than that of the lamps disclosed in Martens et al.

Glennon states that the elastomer may be any natural or synthetic elastomer which is soluble in the acrylate ester monomer and which is of a non-crystallizing amorphous nature. The elastomer is present in from about 4 parts to about 150 parts per hundred parts acrylate monomer. The Glennon adhesive also requires the use of from about 50 parts to about 250 parts of tackifying resin per hundred parts acrylate ester monomer in order to obtain a satisfactory adhesion level to metal and painted steel substrates. Such levels of tackifier increase the glass transition temperature of the polymer matrix. which has a negative effect on low temperature flexibility, and act as chain transfer agents during the polymerization. Further, tackifiers tend to migrate to the surface of the adhesive upon aging, causing the adhesion to deteriorate. Tapes made with Glennon adhesives will not pass the automotive testing, especially on the high solids paints.

Canadian Patent No. 1,192,688 (Moser et al.) discloses an adhesive composition comprising an acrylic monomer yielding a polymer with a glass transition temperature between 0°C and 100°C and at least one dispersible core-shell polymer, the composition being a 100% reactive fluid adhesive. Such adhesives cannot be used as pressure-sensitive adhesives.

European Patent Application, Publication No. 238863, (Klingler et al.) discloses a radiation or heat cured elastomer which exhibits enhanced physical properties by virtue of its cure resulting in phase segregation. The elastomer is dissolved in a methacrylate monomer in the presence of a photoinitiator or thermal initiator. The composition may also contain up to 20% by weight of a reactive acrylic diluent. Operable block copolymers include styrene/elastomer block copolymers, polyurethane block copolymers and polyester/polyether block copolymers. Acrylates analogous to the useful methacrylates are disclosed to yield a transparent non-phase-segregated product which exhibits markedly inferior physical properties.

U.S. Patent No. 4,126,504, (Wolinski et al.) discloses a two-part fast curing adhesive wherein the first part is made up of a thermoplastic non-reactive elastomeric polymer dissolved in a free-radical addition polymerization combination of an acrylic or methacrylic monomer, a copolymerizable monomer containing at least one free carboxylic acid group, and a non-activated free radical addition polymerization catalyst system. The second part comprises an activator system for the free radical catalyst system, and optional accelerator for such system. In one modification, the activator may be encapsulated into insoluble, rupturable microspheres to form a single liquid adhesive. The adhesives disclosed in Wolinski must be applied to one surface, and the activator applied to the other surface, or in the case of single liquid adhesive, a catalyst must still be added at the time of use. The adhesives are therefore not appropriate for use as pressure-sensitive adhesives.

U.S. Patent 3,832,274, (Owston) discloses fast-curing structural adhesives comprising (a) from about 1 to about 30% of an elastomer polymer selected from poly(butadiene) homopolymer, copolymers of butadiene with at least one copolymerizable monomer such as styrene, acrylonitrile and methacrylonitrile, and a copolymer of butadiene selected from the group consisting of homopolymer and copolymer modified by inclusion of up to 5% of a functional monomer; (b) 25% to 85% of at least one polymerizable acrylic monomer selected from acrylates methacrylates, acrylonitrile and methacrylonitrile, (c) 0 to 50% of an ethylenically unsaturated non-acrylic monomer, (d) polymers having intrinsic viscosity in the range from about 0.1 to 1.3, derived from (b) or (c), (e) 5% to 20% of methacrylic acid, and (f) 0.04% to 4% of the reducing component of a redox catalyst polymerization system. The oxidizing component of such catalyst system must be added within fifteen minutes of cure time after the adhesive is in place. The adhesives are structural cements, and are not suitable for use as pressure-sensitive adhesives.

The inventors of the present invention have now discovered that certain ultraviolet-radiation polymerized phase-separated pressure-sensitive adhesives comprising an acrylic copolymer, and an hydrocarbon elastomer, or blend of hydrocarbon elastomers which have at least one segment with a glass transition temperature lower than that of the acrylic copolymer, have good adhesive properties as well as improved cold shock performance.

## Summary of the Invention

Phase-separated, ultraviolet-radiation polymerized, pressure-sensitive adhesives of the invention comprise:

a) from about 70 parts to about 98 parts of an acrylic copolymer of monomers containing:

(i) from about 60 to about 99 parts of an alkyl acrylate monomer, the alkyl groups of which have an average of 4 to 12 carbon atoms, and

(ii) from about 1 part to about 40 parts of a monoethylenically unsaturated polar copolymerizable monomer, and

(iii) from about 0.01 part to about 1 part of a photoinitiator, and

b) correspondingly, from about 30 parts to about 2 parts of a hydrocarbon elastomer or blend of hydrocarbon elastomers containing at least one segment having a lower $T_g$ than the acrylic copolymer, wherein the adhesive has at least a first phase and a second phase, the first phase consisting primarily of the elastomer, and preferably being a continuous phase. Pressure-sensitive adhesives of the invention have improved low temperature shock properties than an otherwise identical adhesive containing no elastomer.

The invention also provides pressure-sensitive adhesive tapes exhibiting improved "cold slam" performance without unacceptable modification of other critical properties.

Description of the Electron Micrographs

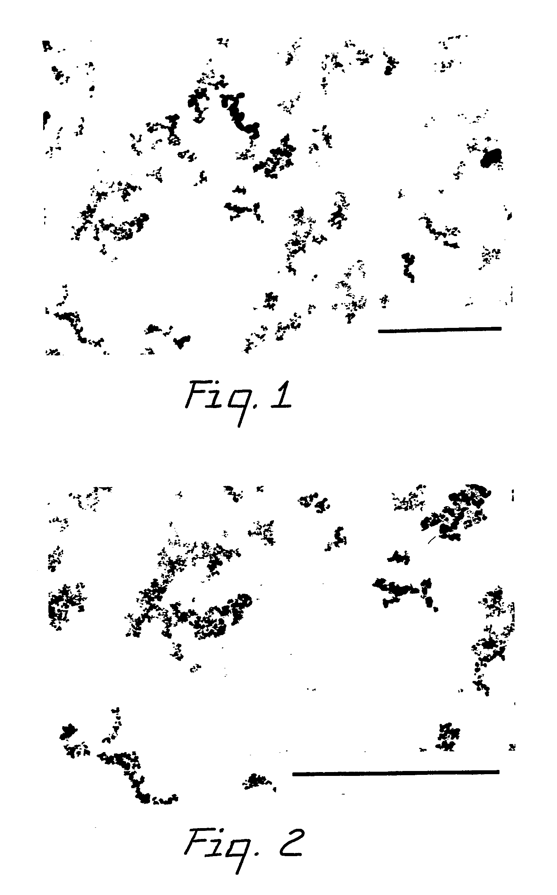

Figure 1 shows the morphology of an acrylate pressure-sensitive adhesive polymer having the following composition, 91 parts isooctyl acrylate (IOA), 9 parts acrylic acid (AA), 0.18 part IrgacureTM 651 photoinitiator, 0.11 part 1,6 hexanedioldiacrylate (HDDA), and 4 parts AerosilTM R972 hydrophobic silica filler, but having no elastomer. The adhesive has but a single phase. The silica filler can be seen as small dark particles in the light featureless IOA/AA matrix.

Figure 2 shows the same morphology as Figure 1, but at 50,000x magnification. The single acrylic phase is featureless, except for the presence of the filler.

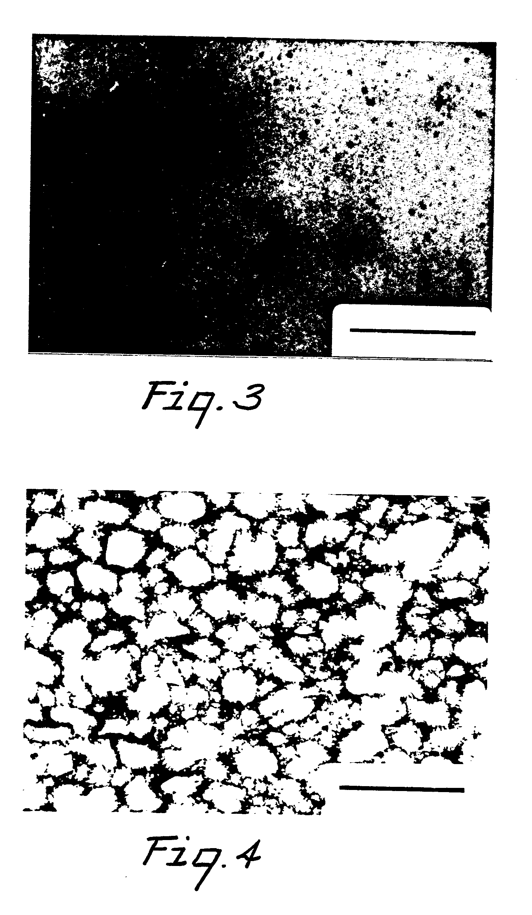

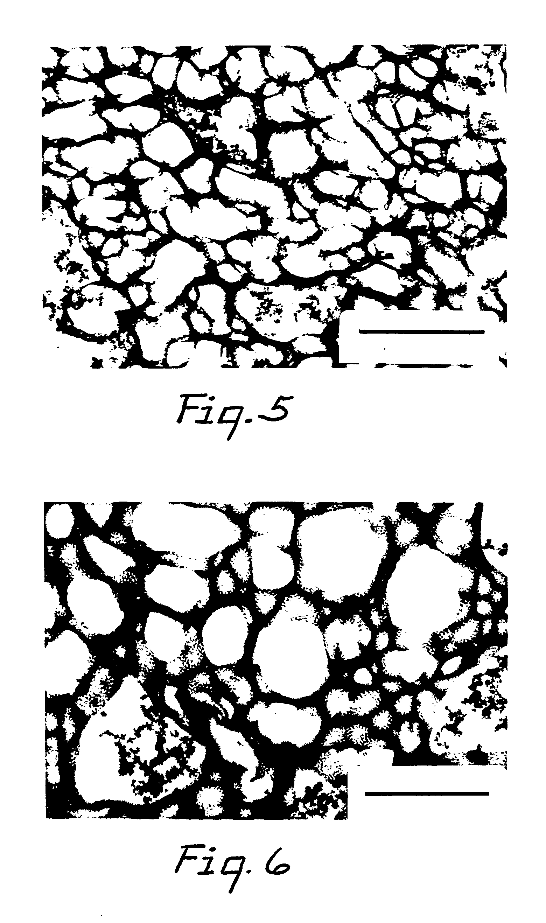

Figure 3 shows the morphology of another comparative acrylate pressure-sensitive adhesive system. The composition of the polymer is 95.5 parts IOA, 4.5 parts AA, and 0.18 part IrgacureTM 651. This adhesive also includes about 50 parts of a hydrogenated rosin ester tackifying agent, ForalTM 85. Like the untackified polymer, this adhesive is single phase.

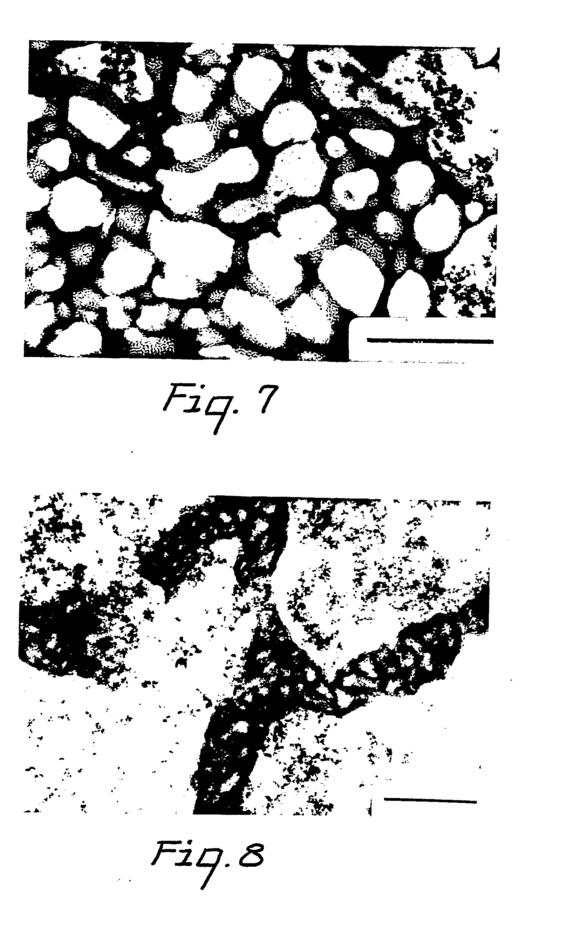

Figure 4 shows the morphology of a preferred adhesive of the invention having the following composition. The adhesive contains 76.4 parts IOA, 7.6 parts AA, and 0.18 part IrgacureTM 651 photoinitiator, and 16 parts DuradeneTM 710, an elastomer having unsaturated segments. The phase-separation is clearly visible. The dark regions are the stained first phase or elastomer phase. The elastomer phase is continuous. The light regions are the second phase, primarily containing the acrylic copolymer; it exists as inclusions of about 0.5 micrometer. The inclusions are relatively uniform in size.

Figure 5 shows the morphology of a more complex phase-separated adhesive of the invention which contains the same components as the adhesive shown in Figure 4, and in addition, 4 parts AerosilTM R972 hydrophobic silica filler and 2.15 parts ExpancelTM 551 DE polymeric microspheres. The microspheres range in size from 20-80 microns, and cannot be seen in this micrograph, which shows only the adhesive in the interstices between the microspheres. Again, the elastomer phase is continuous, and the acrylic copolymer phase exists as inclusions having a relatively uniform size of about 0.5 micrometer. As can be clearly seen, the characteristic phase-separated morphology of compositions of the invention was formed notwithstanding the presence of added fillers of varying sizes.

Figure 6 shows the morphology of another phase-separated adhesive of the invention having the following composition. The adhesive contains 76.4 parts IOA, 7.6 parts AA, 0.18 part IrgacureTM 651, and 0.11 part HDDA, and 16 parts StereonTM 840, an elastomer also containing unsaturated segments. In this figure, the darkly stained elastomer phase can easily be distinguished from the light acrylic copolymer phase. The adhesive also contains 6 parts AerosilTM R972, and 2.15 parts ExpancelTM 551 DE microspheres. The microspheres are not visible in this micrograph for the reasons stated above. The elastomer phase is continuous. The acrylic copolymer phase consists of relatively uniform inclusions averaging about 0.5 micrometer. The hydrophobic silica filler can be seen as small dark particles within the light acrylic matrix.

Figure 7 shows the morphology of another phase-separated adhesive of the invention having the following composition. The adhesive contains 76.4 parts IOA, 7.6 parts AA, 0.18 part IrgacureTM 651, 0.09 part HDDA, 4 parts AerosilTM R972 hydrophobic silica filler, and 16 parts Stereon 845TM, an elastomer containing unsaturated segments. Again, the darkly stained area consists of the elastomer phase, which is continuous. The acrylic copolymer phase exists as relatively uniform inclusions averaging 0.5 micrometer in size. The silica filler can be seen as dark particles in the light acrylic matrix.

While not shown here, phase-separated adhesive compositions of the invention containing similar amounts of other multisegmented copolymer elastomers with unsaturated segments exhibit similar structural arrangement. Such elastomers include, e.g., KratonTM 1101, 1107 and 1118.

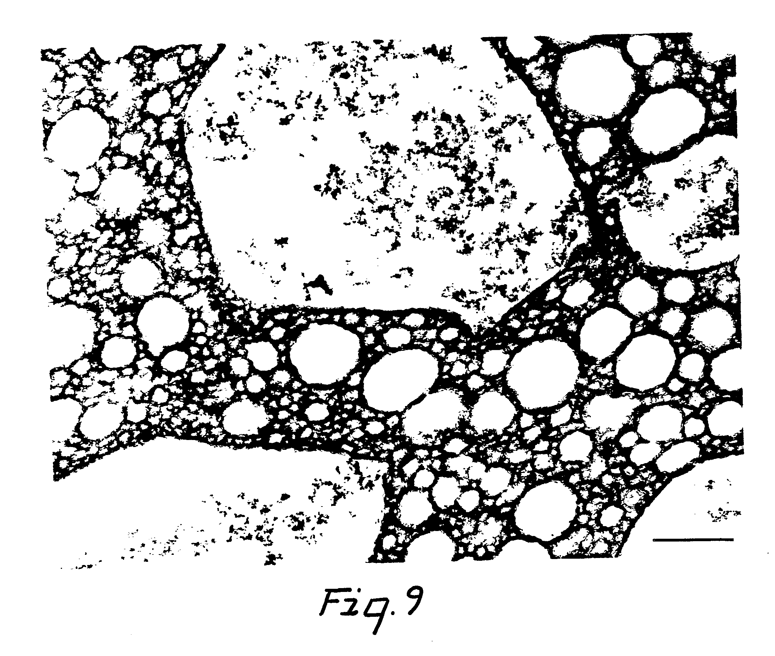

Figure 8 shows the morphology of a phase-separated adhesive having the following composition. The adhesive contains 74.4 parts IOA, 10.6 parts AA, 0.18 part IrgacureTM 651, 0.09 part HDDA, 4 parts AerosilTM R972, and 15 parts of KratonTM G1726, an elastomer having only saturated rubber segments. Again, the darkly stained first phase is the elastomer. The adhesive also contains 2.15 parts of ExpancelTM 551 DE microspheres. For this formulation, the elastomer phase does not appear to be continuous. Large regions of the acrylic copolymer phase, devoid of elastomer are visible wherein the silica can be seen as dark particles in the light acrylic matrix.

Figure 9 shows the morphology of a phase-separated adhesive having the following composition. The adhesive contains 76.4 parts IOA, 7.6 parts AA, 0.18 part IrgacureTM 651, 0.11 part HDDA, 4 parts AerosilTM R972, and 16 parts of Kraton G1726, another elastomer having only saturated segments. The elastomer phase is locally continuous; however, the phase-separated structure is not very uniform in comparison to those systems containing elastomers with unsaturated segments, i.e., the acrylic phase contains both large and small inclusions. As before, the silica filler is visible as small dark particles in the acrylic phase.

Detailed Description of the Invention

The acrylic copolymers useful in compositions of the invention constitute from about 70 to about 98 phr of the phase-separated, ultraviolet-radiation polymerized, pressure-sensitive adhesive compositions. The acrylic copolymers contain at least one alkyl acrylate monomer, preferably a monofunctional unsaturated acrylate ester of non-tertiary alkyl alcohol, the molecules of which have from 4 to about 14 carbon atoms. Such monomers include, e.g., isooctyl acrylate, 2-ethyl hexyl acrylate, isononyl acrylate, decyl acrylate, dodecyl acrylate, butyl acrylate, and hexyl acrylate. The acrylic copolymers contain from about 60 parts to about 99 parts of the alkyl acrylate monomer. The alkyl acrylate monomers are copolymerized with at least one polar monomer.

The polar copolymerizable monomer may be selected from strongly polar monomers such as acrylic acid, itaconic acid, hydroxyalkyl acrylates, or substituted acrylamides or from moderately polar monomers such as N-vinyl pyrrolidone, N-vinyl caprolactam, and acrylonitrile. The polar copolymerizable monomer makes up from about 1 part to about 40 parts of the acrylic copolymer.

Elastomers useful in compositions of the invention are those hydrocarbon elastomers which phase-separate when photopolymerized in adhesives with acrylic monomers. These elastomers include at least one low $T_g$ segment. Low $T_g$, as used herein, means that the segment so defined has a glass transition temperature lower than that of the UV radiation polymerized acrylic copolymer. Typical $T_g$ values for acrylate polymers are about 0°C or lower. Low $T_g$ segments have $T_g$ values of less than 0°C, preferably in the range of from -50°C to -70°C, more preferably less than -70°C. The elastomer comprises from about 2 phr to about 30 phr, preferably from about 5 phr to about 25 phr, more preferably from about 10 phr to about 20 phr of adhesives of the invention.

Preferred elastomers for use in the pressure-sensitive adhesive compositions of the invention are those multisegmented elastomers having at least one unsaturated segment, as such segments have lower $T_g$ values than saturated hydrocarbon segments, and are able to co-react with growing acrylic polymer chains. Such preferred elastomers include StereonTM 840A and StereonTM 845A, styrene-butadiene multiblock copolymers available commercially from Firestone, DuradeneTM 710, a butadiene-styrene copolymer with 27% styrene, available from Firestone; KratonTM D1118, a styrene butadiene diblock copolymer, and KratonTM D1101, a styrene butadiene-styrene triblock copolymer, both KratonTM copolymers available commercially from Shell Chemical Company. The addition of elastomers having at least one unsaturated segment to the acrylic copolymers at preferred levels yields phase-separated pressure-sensitive adhesives having at least two phases, wherein the elastomer forms a continuous first phase and the acrylic copolymer forms the second phase. Such a system provides substantial improvement in low temperature shock properties while maintaining otherwise acceptable adhesive properties such as shear and peel.

Without wishing to be bound by theory, it is believed that such a system exhibits improved low temperature properties because its unique morphology combines the efficient shock damping ability of the elastomer in continuous phase with the good adhesive properties of the acrylic copolymers, as described in U.S. Patent Nos. RE 24,906, (Ulrich) 4,181,752, (Martens) and 4,223,067, (Levens).

When a composition incorporating such an elastomer is examined by Transmission Electron Microscopy (TEM), the phase-separated morphology is clearly visible. In preferred compositions, the elastomeric phase is continuous, and the acrylic copolymer phase exists as relatively uniform inclusions averaging from 0.1 micrometer to about 1 micrometer in size. When highly preferred elastomers such as DuradeneTM 710 are utilized, the inclusions are about 0.5 micrometer.

While less preferred, elastomers having only saturated segments, e.g., styrene ethylene-butylene styrene copolymers such as KratonTM G1726 and KratonTM G1657, both available commercially from Shell Chemical Company, are also useful in compositions of the invention. However, the elastomer in this system does not have as many available sites for crosslinking because of the level of saturation of the segments; the extent of the phase interconnectivity is therefore lower. It should be noted, that commercially available elastomers include many levels of unsaturation. Further, even when an elastomer is made up of all saturated groups, there may still be available sites for crosslinking. This is due to the fact that the hydrogenation may not be 100% complete in the elastomer, and therefore some unsaturated groups may be available. Therefore, there is typically some chemical connectivity between the phases even in compositions containing elastomers having only saturated segments.

Further, compositions containing saturated elastomers have a differing morphology from the systems containing elastomers having at least one unsaturated segment. The elastomer and the acrylate copolymer still phase-separate, however, the first phase elastomer may lack the complete continuity of such first phase where the elastomer has at least one unsaturated segment. The acrylic copolymer phase is visibly less uniform, both in size and distribution of the inclusions. Large regions of acrylic copolymer occur. This reduces the level of vibration damping provided by the elastomer phase. Some improvement in cold-slam behavior is seen with these elastomers over acrylate copolymer systems containing no elastomer, however, the improvement is not as dramatic as that seen where the elastomers used are those having at least one unsaturated segment. However, the use of elastomers having only saturated segments may be preferred when long term adhesive properties are critical, as the hydrogenation reduces the sites for degradation of the elastomer.

Other useful hydrocarbon elastomers include styrene-butadiene elastomers such as other members of the Duradene™ 700 series, e.g., 711, 713, and 707, available commercially from Firestone; Finaprene™ 400 series available from Petrofina, including Finaprene™ 401, 411, 411P, 414 and Europren™ SOL™ T series available from Enichem such as Europren Sol™ T160 series, the SOL™ T190 series, and Kraton™ D1107. Also useful are such elastomers as natural rubber, synthetic polyisoprene, and acrylonitrile-butadiene copolymers. When blends of elastomers are used, each elastomer must meet the requirements stated above, i.e. low $T_g$ segment.

Preferred pressure-sensitive adhesive compositions of the invention exhibit improved cold temperature performance when subjected to "cold slam" testing at temperatures of between -30°C and -45°C while exhibiting excellent shear performance.

The mixture of the photopolymerizable monomers and the elastomer also contains a photoinitiator to induce polymerization of the monomers. Photoinitiators which are useful include the benzoin ethers such as benzoin methyl ether or benzoin isopropyl ether, substituted benzoin ethers such as anisole methyl ether, substituted acetophenones such as 2,2-diethyoxyacetophenone and 2,2-dimethoxy-2-phenyl acetophenone, substituted alpha-ketols such as 2-methyl-2-hydroxy propiophenone, aromatic sulfonyl chlorides such as 2-naphthalene sulfonyl chloride, and photoactive oximes such as 1-phenyl-1,1-propanedione-2-(0-ethoxycarbonyl)-oxime. The photoinitiator is present in an amount of about 0.01 to about 1 phr of the instant pressure-sensitive adhesive compositions.

The mixtures of the elastomer and the photopolymerizable monomers may also contain a crosslinking agent. Preferred crosslinking agents for an acrylic pressure-sensitive adhesive are multifunctional acrylates such as 1,6-hexanedioldiacrylate as well as those disclosed in U.S. Patent No. 4,379,201 (Heilmann et al.), such as trimethylolpropane triacrylate, pentaerythritol tetracrylate, 1,2-ethylene glycol diacrylate, and 1,2-dodecanediol diacrylate. Other useful crosslinking agents include the substituted triazines, such as those disclosed in U.S. Patent Nos. 4,329,384 and 4,330,590 (Vesley), e.g., 2,4-bis(trichloromethyl)-6-p-methoxystyrene-5-triazine and the chromophore halomethyl-5-triazines. When used, the crosslinking agent is present in an amount of from about 0.01 to about 1 phr.

In one preferred embodiment, pressure-sensitive adhesives of the invention further contain microspheres. When microspheres are present, the polymerized adhesive will have a foam-like appearance. The morphology of compositions containing microspheres continues to be phase-separated as described herein.

Especially preferred microspheres are polymeric microspheres, such as those described in U.S. Patent Nos. 3,615,972, 4,075,238, and 4,287,308. The microspheres are available from the Pierce & Stevens Company under the trade name "Microlite" in unexpanded form and "Miralite" in expanded form. Similar microspheres are available from Kema Nord Plastics under the trade name "Expancel" and from Matsumoto Yushi Seiyaku under the trade name "Micropearl". In expanded form, the microspheres have a specific density of approximately 0.02-0.036 g/cc. It is possible to include the unexpanded microspheres in the pressure-sensitive adhesive composition and subsequently heat them to cause expansion, but it is generally preferred to mix the expanded microspheres into the adhesive. This process makes it easier to ensure that the hollow microspheres in the final adhesive are substantially surrounded by at least a thin layer of adhesive.

Polymeric microspheres having an average diameter of 10 to 200 micrometers may be blended into the polymerizable composition in amounts of from about 15% to about 75% by volume prior to coating.

Also useful are glass microspheres having an average diameter of from 5 to 200 micrometers, preferably from about 20 to about 80 micrometers. Such microspheres may comprise 5% to 65% by volume of the pressure-sensitive adhesive. The pressure-sensitive adhesive layer should be at least 3 times as thick as the diameter of the glass microspheres, preferably at least 7 times.

Other useful materials which can be blended into the pressure-sensitive adhesive include, but are not limited to, fillers, pigments, plasticizers, chain transfer agents, tackifiers, fibrous reinforcing agents, woven and nonwoven fabrics, foaming agents, antioxidants, stabilizers, fire retardants and viscosity adjusting agents.

An especially useful filler material is hydrophobic silica as disclosed in U.S. Patents No. 4,710,536, and 4,749,590, (Klingen, et al.). In one preferred embodiment of the present invention, the pressure-sensitive adhesive layer further comprises from about 2 to about 15 phr of a hydrophobic silica having a surface area of at least 10 $m^2/g$.

The pressure-sensitive adhesive of the invention is preferably prepared by dissolving or dispersing the elastomer into alkyl acrylate monomer, and then adding the polar copolymerizable monomer(s), and photoinitiator. Optional crosslinking agent may also be dissolved into the syrup.

The elastomers appear to be dispersible with the photopolymerizable monomers when originally mixed. However, phase-separation is already present on a microscale, and as the monomers are reacted on the carrier web, the elastomer chains become less dispersible in the growing acrylic copolymer chains, resulting in an increased degree of phase-separation. When elastomers having at least one unsaturated segment are used, chemical crosslinking between the acrylic polymer chains and the unsaturated segments of the elastomer hinders large scale rearrangement of the initial phase-separated structure, resulting in a high level of interconnectivity of the phases and unique morphologies and properties observed for these systems. When elastomers having only saturated segments are used, structural rearrangement is less hindered, and the phase-separation is on a much larger scale, i.e., the inclusions in the phases are not as uniform in size or distribution.

This composition is coated onto a flexible carrier web and polymerized in an inert, i.e., oxygen free, atmosphere, e.g., a nitrogen atmosphere. A sufficiently inert atmosphere can be achieved by covering a layer of the photoactive coating with a plastic film which is substantially transparent to ultraviolet radiation, and irradiating through that film in air using fluorescent-type ultraviolet lamps which generally give a total radiation dose of about 500 millijoules/$cm^2$. If, instead of covering the polymerizable coating, the photopolymerization is to be carried out in an inert atmosphere, the permissible oxygen content of the inert atmosphere can be increased by mixing into the polymerizable monomer an oxidizable tin compound as taught in U.S. Patent No. 4,303,485, (Levens), which also teaches that such procedures will allow thick coatings to be polymerized in air. The coating of the tapes may be accomplished using any conventional means such as roller coating, dip coating or extrusion coating.

Pressure-sensitive adhesive tapes of the invention may contain more than one layer. Such multi-layered tapes include at least one layer of the phase-separated, pressure-sensitive adhesive. Such layer may have a thin layer of a different pressure-sensitive adhesive laminated thereto, so that the adhesive of the invention is being used as a backing or core layer. The additional layer or layers may be any conventional adhesive known in the art, however, acrylic adhesives are preferred. More preferably, additional adhesive layers include at least one alkyl acrylate monomer, and a strongly polar or moderately polar copolymerizable monomer.

## Testing Procedures

The following tests have been used to evaluate adhesives of the invention. All percents, parts and ratios herein are by weight unless specifically stated otherwise.

## Analysis of Adhesive Morphology by Transmission Electron Microscopy

## Samples containing no elastomer and Samples containing elastomers with unsaturated segments.

Thin sections (500-1000 Angstroms) for TEM testing were prepared at a sample temperature of -140° C using a Reichert-JungTM Ultracut ETM ultramicrotome equipped with an FC4 cryoattachment. A DiatomeTM diamond knife with a stainless steel boat was employed. The sections were floated off onto n-propanol and collected on 700 mesh copper grids, which were then exposed to the vapors of a 4% aqueous solution of osmium tetroxide for 4 hours. (The osmium tetroxide reacts with the double bonds in the unsaturated rubber segments of the elastomers present; rendering such segments dark in the micrographs.) The stained sections were then examined using a JEOL 100 CX electron microscope in transmission mode operated at 100 kV.

## Samples containing copolymers with only saturated segments.

For these samples, the adhesive films are stained prior to microtoming by exposing them to the vapors of a 0.5% aqueous solution of ruthenium tetroxide for 2 hours. This stain reacts preferentially with the polystyrene block in the copolymer; therefore the polystyrene blocks appear dark in the micrographs. The cryoultramicrotoming and transmission electron microscopy are then performed as described above.

## Breakaway/Continuous Peel Test

A 12.7 mm x 200 mm pressure-sensitive adhesive transfer tape, carried on the release liner, is aligned squarely over the 15 mm x 150 mm face of a rigid polyvinyl chloride test bar about 6 mm thick and pressed firmly into place by rolling once with a 6.8 kg roller. The liner is then removed from the tape, and the exposed adhesive surface aligned in the center of a freshly painted steel panel approximately 100 mm x 300 mm, with one end of the test bar extending beyond the end of the panel. After rolling the test bar with a 6.8 kg (15 lb.) roller at the rate of about 300 mm/minute to ensure good contact, the specimen is allowed to age for any desired period of time and then trimmed to a width of approximately 50 mm. The specimen is then clamped with a horizontal fixture mounted in the lower jaw of a tensile testing machine. A metal bar approximately 8 mm thick and having an opening at one end corresponding to the cross section of the vinyl test bar is slipped over the extended end of the test bar, and the opposite end gripped in the upper jaw of the tensile testing machine. The jaws are then separated at 30.5 cm/minute, noting both the force ("Breakaway Peel Value") required to initiate separation of the vinyl test bar from the painted panel and the force ("Continuous Peel Value") required to continue the separation until the bar is completely removed.

## 90° Peel Adhesion

A strip of anodized aluminum 19 mm x 200 mm x 0.125 mm is positioned on the adhesive face of the sample. Pressure is applied to the aluminum by rolling with a 2 kg roller. The opposite face of the sample is then firmly bonded to a rigid substrate and the aluminum strip removed at 90° to the adhesive surface at a speed of 30.5 mm/minute, noting the average adhesion in g/cm width.

## Tensile/Elongation

A dumbbell-shaped strip of a tape to be tested is prepared, and each end wrapped with 42 mm wide cellophane tape, leaving a 50 mm x 6.4 mm strip of the test tape exposed. The cellophane-covered ends of the test specimen are then clamped in the opposite jaws of a tensile machine, and the jaws separated at a rate of 500 mm/minute, recording the elongation at break and calculating the tensile strength, based on the thickness of the test tape.

## Aluminum T-Peel

A foam tape or other double-coated tape sample is placed between two strips of 19 mm x 200 mm x 0.125 mm anodized aluminum, leaving an adhesive-free 25 mm tab at each end of each aluminum strip. The assembly is rolled down with a 6.8 kg roller, one pass in each direction, and the samples then conditioned for 1-2 hours at room temperature. The tabs are bent back at 90° in opposite directions and respectively clamped in the upper and lower jaws of a tensile testing machine, after which the jaws are separated at 30.5 cm/minute, noting the average force required to effect separation.

## Static Shear Test

A strip of transfer tape or double-coated tape, 1.27 cm wide and 2.54 cm in length is adhered by its adhesive to a stainless steel plate. The liner is then removed and a second stainless steel panel is adhered to the newly exposed adhesive surface. The test panel assembly is then placed in a horizontal position and a 1 kg weight applied for a period of 15 minutes to ensure intimate contact between the surfaces. The assembly is then mounted in a vertical plane, suspended from the upper edge of one panel and a 1 kg mass attached to the lower edge of the other panel. The time at which the mass falls is the failure value. The test is discontinued if the tape has not failed after 10,000 minutes.

## Dynamic Shear Test

A 25.4 mm wide adhesive foam tape is placed on one end of a 76.2 mm x 25.4 mm stainless steel panel and trimmed to a length of 25.4 mm. The liner is then removed and a second steel panel with the same size adhered to the exposed adhesive surface. This square foam sample is pressed firmly into place by rolling once with a 6.8 kg roller at the rate of about 300 mm/minute, and then conditioned for 24 hours at room temperature. The tabs are clamped in the upper and lower jaws of a tensile testing machine, after which the jaws are separated at 10 mm/minute, noting the maximum force in (N/mm$^2$) required to effect separation.

## T-Block

The contact face of one T-block is placed onto the exposed foam surface. To ensure a good bond of the adhesive to the T-block the surface of the liner is rubbed with thumb pressure. After the foam is trimmed to the size of the T-block (25.4 mm x 25.4 mm) and the liner removed, the second block is adhered to the exposed foam. The mated T-blocks are placed into a fixture and a 11.3 kg static load is applied for 15 seconds. The sample is conditioned 60 minutes at room temperature. One side of the T-block is hung in the upper jaw of the tensile machine, so that the lower jaw falls into place. After the lower hanger is clamped, the tensile testing machine is started. The jaws are separated at 51 mm/minute and the maximum cleavage force is noted.

## Cold Slam

A rigid vertical frame approximately 40 cm square is provided at its upper edge with a similar dimensioned hinged frame. Silicone foam shock-absorbing tape is then mounted at five locations on the vertical frame. A 100 mm x 300 mm steel test panel on which are four 15 mm vinyl test bars (of the described in the preceding test) is mounted within the hinged frame and allowed to remain 72 hours at room temperature. The assembly is then placed in a cold room for 16 hours to cool to the desired temperature (-30°C to -45°C), and then subjected to a test in which the hinged portion of the frame is raised to a horizontal position and allowed to drop, slamming against the vertical portion, noting whether any of the vinyl test bars become detached. After 10 slams, the test is deemed complete and the number of failures is reported.

The following examples are to be considered as illustrative in nature, and are not limiting in any way. The scope of the invention is that which is defined in the claims only.

## Examples

The following abbreviations and elastomer commercial names are used in the examples:

IOA - isooctyl acrylate

AA - acrylic acid

NVP - N-vinylpyrrolidone

$T_g$ - glass transition temperature

RT - room temperature

RH - relative humidity

OPEL Paint - a melamine crosslinked alkyd enamel paint

VW Paint - a melamine crosslinked alkyd enamel paint

| Elastomers | |
|---|---|
| StereonTM 845A | a styrene-butadiene multiblock copolymer with 48% styrene, available from Firestone |
| StereonTM 840A | a styrene-butadiene multiblock copolymer with 43% styrene, available from Firestone |
| KratonTM G1726 | a blend of 30% styrene/ethylene-butylene/styrene triblock and 70% styrene/ethylene-butylene diblock copolymer available from Shell |
| KratonTM G1657 | a styrene/ethylene-butylene/styrene copolymer with 14% styrene, available from Shell |
| DuradeneTM 710 | a butadiene styrene copolymer having 27% styrene, available from Firestone |

### Example 1

A premix was prepared using 84.6 parts isooctyl acrylate, 6.4 parts acrylic acid, and 9 parts KratonTM G1657. To this premix 6 parts hydrophobic silica, (AerosilTM R-972, available from Degussa Corp.) was then added, along with 2.5 parts polymeric microspheres (ExpancelTM 551DE, available from Kema Nord), 0.2 parts 2,2-dimethoxy 2-phenylacetophenone photoinitiator (IrgacureTM 651, available from Ciba-Geigy Corp.) and 0.11 parts HDDA (1,6 hexanedioldiacrylate). This was coated onto a biaxially-oriented 0.05 mm thick poly(ethylene terephthalate) (PET) film, the facing surfaces of which had a low adhesion release coating thereon, and covered by a second such film. The knife setting was adjusted to provide a uniform coating of about 0.75 mm in thickness. These prepared composites were exposed to a bank of Sylvania 40-watt ultraviolet fluorescent lamps which provide ultraviolet radiation at a rate of 1 mw/sec/cm$^2$. The polymerized foam-like adhesive was tested for 90° peel adhesion to stainless steel, VW paint and Opel paint, for Aluminum T-peel, Breakaway Continuous Peel from VW and Opel paint, T-block and Cold Slam. The results are shown in Table I.

### Comparative Example 1-C

A premix prepared using 93 parts isooctyl acrylate, 7 parts acrylic acid and 0.3 part benzoylperoxide, LucidolTM, was partially polymerized through thermal treatment to provide a coatable syrup having a Brookfield viscosity of about 3000 cps. To this syrup 6 parts of AerosilTM R972, was then added, along with 2.5 parts ExpancelTM 551 DE polymeric microspheres, 0.2 parts IrgacureTM 651, and 0.11 parts HDDA. This was coated onto a biaxially-oriented 0.05 mm thick PET film, the facing surfaces of which had low-adhesion release coatings thereon, and covered by a second such film. The knife setting was adjusted to provide an uniform coating of about 0.75 mm thickness. The compositions were exposed to a bank of Sylvania 40-watt ultraviolet fluorescent lamps to provide ultraviolet radiation at a rate of 1 mw/sec/cm$^2$. The polymerized foam-like adhesive was tested in the same way as in Example 1. The results are shown in Table I.

## Table I

| 90° peel adhesion to stainless steel | Example 1 (N/dm) | Example 1-C (N/dm) |
|---|---|---|
| 2 min Dwell | 98 | 115 |
| 20 min Dwell | 126 | 132 |
| 3 days RT | 264 | 213 |
| 90° peel adhesion to VW Paint | (N/dm) | (N/dm) |
| 2 min Dwell | 82 | 85 |
| 20 min Dwell | 94 | -- |
| 3 days RT | 176 | 148 |
| 90° peel adhesion to Opel Paint | (N/dm) | (N/dm) |
| 2 min Dwell | 86 | 88 |
| 20 min Dwell | 90 | 96 |
| 4 days RT | 182 | 151 |
| Al T-Peel (N/dm) | 350 | 274 |

Breakaway/Continuous Peel (N/dm)

VW Paint

|  |  |  |
|---|---|---|
| 2 min Dwell | 843/223 | 783/180 |
| 3 days RT | 887/228 | 870/202 |
| 3 days 38°C/100% RH | 951/342 | 1030/306 |
| 3 days RT then 7 days 70°C | 1186/362 | 1394/418 |

Opel Paint

|  |  |  |
|---|---|---|
| 2 mins Dwell | 670/108 | 750/117 |
| 3 days RT | 990/326 | 910/195 |
| 3 days 38°C/100% RH | 973/308 | 762/253 |
| 3 days RT then 7 days 70°C | 1270/397 | 1109/425 |

T-Block (N/mm$^2$)                   585              452

Cold Slam Test (Failures/
        No. of slams)

Opel Paint

|  |  |  |
|---|---|---|
| -35°C | 0/10 | 0/10 |
| -40°C | 0/10 | 2/4 |
|  |  | 2/5 |
| -45°C | 1/3 | 1/2 |
|  |  | 1/3 |
|  |  | 2/4 |
| -50°C | 1/5 | 2/1 |
|  |  | 2/2 |

VW Paint

|  |  |  |
|---|---|---|
| -35°C | 0/10 | 0/10 |
| -40°C | 0/10 | 0/10 |
| -45°C | 0/10 | 1/6 |
|  |  | 3/7 |
| -50°C | 2/10 | 1/3 |
|  |  | 3/4 |

Example 2 and Comparative Example 2-C

Examples 2 and 2-C were made in the same way as Examples 1 and 1-C. Both surfaces of the polymerized foamlike adhesive were then laminated with a 20 micrometer layer of an acrylate pressure-sensitive adhesive of the type disclosed in U.S. Patent 24,906 (Ulrich), and the composite was then tested for 90° peel adhesion to stainless steel, 90° peel adhesion to Opel paint & VW paint, Al T-peel, T-block, Dynamic Shear, Static Shear, Breakaway/Continuous Peel and Cold Slam and the results are shown in Table II.

Table II

| | | Example 2 | Example 2-C |
|---|---|---|---|
| 90° peel adhesion to stainless steel | (N/dm) | | |
| 2 min Dwell<br>20 min Dwell<br>3 days RT | | 123<br>210<br>379 | 149<br>229<br>365 |
| 90° peel adhesion to VW Paint | (N/dm) | | |
| 2 min Dwell<br>20 min Dwell<br>3 days RT | | 189<br>230<br>636 | 197<br>232<br>503 |
| 90° peel adhesion to Opel Paint | (N/dm) | | |
| 2 min Dwell<br>20 min Dwell<br>3 days RT<br>Al T-Peel (N/dm)<br>T-Block (N/mm²)<br>Dynamic Shear (N/mm²)<br><br>Static Shear 750g/70°C (min) | | 157<br>220<br>654<br>380<br>489.1<br>240.4<br>250.2<br>10,000<br>10,000 | 159<br>207<br>436<br>279<br>423.2<br>196.2<br>220.7<br>10,000<br>10,000 |
| Breakaway/Continuous Peel | (N/dm) | | |
| Opel paint | | | |
| 2 min<br>3 days RT<br>38°C/100% RH<br>7 days 70°C | | 712/180<br>752/354<br>775/334<br>664/346 | 656/199<br>792/320<br>695/293<br>609/334 |
| VW paint | | | |
| 2 min<br>3 days RT<br>38°C/100% RH<br>7 days 70°C | | 731/180<br>795/270<br>709/291<br>774/368 | 711/180<br>814/304<br>716/284<br>699/365 |
| Cold Slam | (Failures/No. of Slams) | | |
| VW Paint | | | |
| -30°C<br>-35°C | | 0/10<br>0/10 | 1/1, 1/4, 1/2, 1/8<br>1/4, 3/5 |
| Opel Paint | | | |
| -30°C<br>-35°C | | 0/10<br>1/5<br>1/8<br>1/10 | 1/4, 1/6, 1/7<br>1/7, 1/10 |

Example 3

A premix was prepared using 73.5 parts IOA, 10.5 parts AA, and 16 parts DuradenerTM 710. To one hundred parts of this premix 4 parts AerosilTM R-972, was then added, along with 2.15 parts ExpancelTM 551DE, 0.18 parts IrgacureTM 651, and 0.11 parts HDDA. This was coated as described in Example 1, and tested for 90° peel to stainless steel, for Aluminum T-peel, Breakaway Continuous peel and Cold Slam. The results are shown in Table III.

Comparative Example 3

A premix prepared using 87.5 parts IOA, 12.5 parts AA and 0.3 part benzoylperoxide, LucidolTM, was partially polymerized through thermal treatment to provide a coatable syrup having a Brookfield viscosity of about 3000 cps. To one hundred parts of this syrup 4 parts of AerosilTM R972 was then added, along with 2.15 parts ExpancelTM 551 DE polymeric microspheres, 0.18 parts IrgacurerTM 651, and 0.11 parts HDDA. This was coated as described in Comparative Example 1. The polymerized foamlike adhesive was tested in the same way as in Example 3. The results are shown in Table III.

Examples 4 and 5 and Comparative Examples 4-C and 5-C

Examples 4 and 4-C were prepared using the same methods as Example 1 and 1-C, except that 16 parts StereonTM 845A elastomer were used instead of DuradeneTM 710. The cured sample was tested in the same way as Example 3 and the results shown in table III.

Examples 5 and 5-C were prepared using the methods of Examples 1 and 1-C respectively except differing elastomers and monomer ratios were used. In Example 5, a premix was made of 76.4 parts IOA, 7.6 parts AA, 8 parts DuradeneTM 710 and 8 parts StereonTM 840A. In Comparative example 5-C, a premix of 91 parts IOA and 9 parts AA was thermally prepolymerized, using benzoylperoxide,to make a coatable syrup with a Brookfield viscosity of about 3000 centipoise. The test results are shown in Table III.

Table III

| Ex. | 90° Peel Adhesion (Opel Paint, 20 mins.) (N/dm) | Al T-Peel (N/dm) | Breakaway/Continuous Peel (N/dm) | Cold Slam (-45°C on VW Paint) (Failures/No. of Slams) |
|-----|---|---|---|---|
| 3 | 164 | 340 | 1264/448 | 0/10 |
| 3-C | 148 | 340 | 1200/518 | 4/2 |
| 4 | 208 | 416 | 1208/570 | 0/10 |
| 4-C | 148 | 340 | 1200/570 | 4/2 |
| 5 | 124 | 608 | 776/314 | 0/10 |
| 5-C | 108 | 526 | 720/235 | 4/5 |

Examples 6 and 7 and Comparative Examples 6-C & 7-C

These were prepared using the methods of Examples 5 and 5-C respectively except that different levels elastomer, different fillers, and a different monomer ratio were used. These differences are listed, along with test results in Tables IVA and IVB.

14

EP 0 349 216 A1

Table IVA

| Example | IOA | Parts AA | Stereon™ 845 | Bubbles | 180° Peel (N/dm) | Al T-Peel (N/dm) | Breakaway/Continuous Peel 3 days RT Opel Paint (N/dm) | Cold Slam -31°C Opel Paint (Failures/No of slams) |
|---|---|---|---|---|---|---|---|---|
| 6 | 77.4 | 7.6 | 15 | 8.0 glass | 49.1 | 301.4 | 415.8 | 1/10 |
| 6-C | 91.0 | 9.0 | -- | 8.0 glass | 23.3 | 275 | 411.4 | 4/5 |

Table IVB

| Example | IOA | Parts AA | Stereon™ 845 | Bubbles | 180° Peel (N/dm) | Al T-Peel (N/dm) | Breakaway/Continuous Peel 3 days RT VW Paint (N/dm) | Cold Slam -45° C VW Paint (Failures/No. of slams) |
|---------|-----|----------|--------------|---------|------------------|------------------|-----------------------------------------------------|--------------------------------------------------|
| 7 | 77.4 | 7.6 | 15 | 2.15 polymeric | 58.6 | 333.3 | 469.7 | 0/10 |
| 7-C | 91.0 | 9.0 | -- | 2.15 polymeric | 26.7 | 294.8 | 441.1 | 4/5 |

EP 0 349 216 A1

Examples 8 - 33 and Comparative Examples 8-C, 16-C and 25-C

These examples were prepared using the same methods of Examples 1 and 1-C respectively, except that different elastomers, amounts of elastomer, and monomer ratios in the ultraviolet-radiation polymerized polymer were used. These differences and test results are listed in Table V and VI respectively.

Table V

| | | | Elastomer | | |
| Ex. | Monomer IOA (parts) | AA (parts) | Name | (parts) | Micro-Spheres (parts) |
|---|---|---|---|---|---|
| 8 | 73.5 | 10.5 | Stereon 845A | 16 | 2.15 |
| 8-C | 87.5 | 12.5 | --- | | 2.15 |
| 9 | 73.5 | 10.5 | Stereon 845A | 12 | 2.15 |
| | | | Duradene 710 | 4 | |
| 10 | 73.5 | 10.5 | Stereon 845A | 8 | 2.15 |
| | | | Duradene | 8 | |
| 11 | 73.5 | 10.5 | Stereon 845A | 4 | 2.15 |
| | | | Duradene | 12 | |
| 12 | 73.5 | 10.5 | Duradene | 16 | 2.15 |
| 13 | 73.5 | 10.5 | Stereon 840 | 16 | 2.15 |
| 14 | 73.5 | 10.5 | Stereon 840 | 8 | 2.15 |
| | | | Duradene 710 | 8 | |
| 15 | 74.4 | 10.6 | Kraton G1726 | 15 | 2.15 |
| 16 | 76.4 | 7.6 | Stereon 845A | 16 | 2.15 |
| 16-C | 91.0 | 9.0 | --- | | 2.15 |
| 17 | 76.4 | 7.6 | Stereon 845A | 12 | 2.15 |
| | | | Duradene 710 | 4 | 2.15 |
| 18 | 76.4 | 7.6 | Stereon 845A | 8 | 2.15 |
| | | | Duradene 710 | 8 | |
| 19 | 76.4 | 7.6 | Stereon 845A | 4 | 2.15 |
| | | | Duradene 710 | 12 | |
| 20 | 76.4 | 7.6 | Duradene 710 | 16 | 2.15 |
| 21 | 76.4 | 7.6 | Stereon 840 | 16 | 2.15 |
| 22 | 76.4 | 7.6 | Stereon 840 | 8 | 2.15 |
| | | | Duradene 710 | 8 | |
| 23 | 82.8 | 8.2 | Kraton G1657 | 9 | 2.15 |
| 24 | 77.3 | 7.7 | Kraton G1726 | 15 | 2.15 |
| 25 | 78.1 | 5.9 | Stereon 845A | 16 | 2.15 |
| 25-C | 93.0 | 7.0 | --- | | 2.15 |
| 26 | 78.1 | 5.9 | Stereon 845A | 12 | 2.15 |
| | | | Duradene 710 | 4 | 2.15 |
| 27 | 78.1 | 5.9 | Stereon 845A | 8 | 2.15 |
| | | | Duradene 710 | 8 | |
| 28 | 78.1 | 5.9 | Stereon 845A | 4 | 2.15 |
| | | | Duradene 710 | 12 | |
| 29 | 78.1 | 5.9 | Duradene 710 | 16 | 2.15 |
| 30 | 78.1 | 5.9 | Stereon 840 | 16 | 2.15 |
| 31 | 78.1 | 5.9 | Stereon 840 | 8 | 2.15 |
| | | | Duradene 710 | 8 | |
| 32 | 84.6 | 6.4 | Kraton G1657 | 9 | 2.15 |
| 33 | 79.0 | 6.0 | Kraton G1726 | 15 | 2.15 |

Table VI

| Ex. | 90° Peel Adhesion (Opel Paint, 20 mins.) (N/dm) | Al T-Peel (N/dm) | Breakaway/Continuous Peel (N/dm) | Cold Slam (-45°C on VW Paint) (Failures/No. of Slams) |
|---|---|---|---|---|
| 8 | 208 | 416 | 1208/570 | 0/10 |
| 8-C | 148 | 340 | 1200/518 | 4/2 |
| 9 | 192 | 392 | 1224/589 | 0/10 |
| 10 | 188 | 364 | 1032/350 | 0/10 |
| 11 | 188 | 372 | 1152/488 | 0/10 |
| 12 | 164 | 340 | 1264/448 | 0/10 |
| 13 | 148 | 376 | 1152/532 | 0/10 |
| 14 | 148 | 376 | 1304/536 | 0/10 |
| 15 | 164 | 288 | 984/508 | 4/8 |
| 16 | 148 | 678 | 840/473 | 0/10 |
| 16-C | 108 | 526 | 720/235 | 4/5 |
| 17 | --- | 630 | 872/318 | 0/10 |
| 18 | 152 | 638 | 896/287 | 0/10 |
| 19 | 148 | 630 | 784/330 | 0/10 |
| 20 | 116 | 526 | 696/275 | 0/10 |
| 21 | 120 | 630 | 840/376 | 0/10 |
| 22 | 124 | 608 | 776/314 | 0/10 |
| 23 | 120 | 624 | 1216/486 | 0/10 |
| 24 | 128 | 600 | 1016/596 | 0/10 |
| 25 | 172 | 116 | 816/346 | 1/10 |
| 25-C | 255 | 88 | 544/189 | 4/3 |
| 26 | 154 | 92 | 800/246 | 0/10 |
| 27 | 174 | 112 | 648/189 | 0/10 |
| 28 | 282 | 80 | 680/212 | 0/10 |
| 29 | 164 | 76 | 456/128 | 0/10 |
| 30 | 164 | 72 | 736/224 | 0/10 |
| 31 | 167 | 76 | 848/312 | 0/10 |
| 32 | 328 | 76 | 680/304 | 0/10 |
| 33 | 284 | 128 | 624/240 | 0/10 |

Examples 34 - 37 and Comparative Examples 34-$C_1$ , 34-$C_2$ and 35-C

These examples were made in the same way as Examples 1 and 1-C except that differing elastomers, amounts of elastomer, and monomer ratios in the ultraviolet-radiation polymerized polymer were used. These differences are listed in Table VII and the test results are listed in Table VIII.

Table VII

| Ex. | Monomer | | | | | Polymer | | Spheres | |
|---|---|---|---|---|---|---|---|---|---|
| | IOA (parts) | AA (parts) | IRG (parts) | R-972 (parts) | HDDA (parts) | Name | (parts) | Name | (parts) |
| 34 | 85 | 8 | 0.2 | 4 | 0.11 | Natural Rubber CV50 | 7 | Exp551DE | 2.15 |
| 34-C$_1$ | 91 | 9 | 0.2 | 4 | 0.11 | --- | | Exp551DE | 2.15 |
| 34-C$_2$ | 91 | 9 | 0.1 | 4 | 0.13 | | | Glass | 8 |
| 35 | 86.5 | 6.5 | 0.2 | 6 | 0.11 | Natural Rubber CV50 | 7 | Exp551DE | 2.15 |
| 35-C | 93 | 7 | 0.2 | 6 | 0.11 | --- | | Exp551DE | 2.15 |
| 36 | 85 | 8 | 0.2 | 4 | 0.11 | Kraton G-1657 | 7 | Exp551DE | 2.15 |
| 37 | 86.5 | 6.5 | 0.2 | 6 | 0.11 | Kraton G-1657 | 7 | Exp551DE | 2.15 |

Table VIII

| Ex. | 90° Peel (Stainless Steel) (N/dm) 20 mins. | 90° Peel (Opel Paint) (N/dm) 20 mins. | 90° Peel (VW Paint) (N/dm) | Cold Slam (-33°C on Opel Paint) (Failures/No. of Slams) | Cold Slam (-33°C on VW Paint) (Failures/No. of Slams) |
|---|---|---|---|---|---|
| 34 | 96 | 80 | 104 | 0/10 | 0/10 |
| 34-C$_1$ | 144 | 104 | 160 | 4/10 | 0/10 |
| 34-C$_2$ | 176 | 96 | 120 | 4/10 | 4/10 |
| 35 | 96 | 96 | 128 | 0/10 | 0/10 |
| 35-C | 160 | 96 | 152 | 3/10 | 1/10 |
| 36 | 128 | 88 | 112 | 0/10 | 0/10 |
| 37 | 176 | 96 | 184 | 0/10 | 0/10 |

Example 38 and Comparative Examples 38-C and 38-C₂

These examples were made using the same methods as used in Examples 1 and 1-C except different elastomers and elastomer to monomer ratios were used, with and without polymeric microspheres. These differences are shown in Table IX and the test results are listed in Table X.

Table IX

| | Monomer | | | | | Polymer | | |
|---|---|---|---|---|---|---|---|---|
| Ex. | IOA (parts) | AA (parts) | IRG (parts) | HDDA (parts) | R-972 (parts) | Name | (parts) | Spheres (Exp551DE) (parts) |
| 38 | 85 | 6 | 0.2 | 0.11 | 6 | Kraton G-1657 | 9 | 2.15 |
| 38-C₁ | 93 | 7 | 0.2 | 0.11 | 6 | --- | | 2.15 |
| 38-C₂ | 93 | 7 | 0.2 | 0.11 | 6 | --- | | -- |

Table X

| Ex. | 90° Peel (Stainless Steel) (N/dm) 20 mins. | 90° Peel (Opel Paint) (N/dm) 20 mins. | 90° Peel (VW Paint) (N/dm) 20 mins. | Al T-peel (N/dm) | Cold Slam VW Paint-40°C (Failures/No. of Slams) |
|---|---|---|---|---|---|
| 38 | 110 | 98 | 70 | 368 | 0/10 |
| 38-$C_1$ | 114 | 95 | 96 | 268 | 1/4 |
| 38-$C_2$ | 244 | 184 | 171 | 244 | 2/2 |
| Ex. | Cold Slam VW Paint-45°C (Failures/No. of Slams) | Breakaway/Continuous Peel (VW Paint) (N/dm) | Dynamic Shear (N/mm$^2$) | | |
| 38 | 0/10 | 858/234 | 0.33 | | |
| 38-$C_1$ | 1/1 | 784/181 | 0.38 | | |
| 38-$C_2$ | 2/2 | 846/304 | 0.29 | | |

EP 0 349 216 A1

**Claims**

1. A pressure-sensitive adhesive tape comprising a phase-separated ultraviolet-radiation polymerized pressure-sensitive adhesive layer comprising:

a) from about 65 parts to about 95 parts of an acrylic copolymer of monomers containing:

(i) from about 60 to about 90 parts of an alkyl acrylate monomer, the alkyl groups of which have an average of 4 to 12 carbon atoms,

(ii) correspondingly, from about 40 parts to about 10 parts of a monoethylenically unsaturated polar copolymerizable monomer, and

(iii) from about 0.01 part to about 1 part of a photoinitiator, and

b) correspondingly, from about 35 parts to about 5 parts of a hydrocarbon elastomer or blend of hydrocarbon elastomers, each of said elastomers comprising at least one unsaturated segment having a lower $T_g$ than said acrylic copolymer,

said adhesive layer having at least a first phase and a second phase, said first phase consisting primarily of said elastomer, said second phase consisting primarily of said acrylic copolymer, wherein said pressure-sensitive adhesive tape has improved adhesion to painted surfaces and low temperature shock performance than an otherwise identical adhesive tape wherein the adhesive layer contains no hydrocarbon elastomer.

2. The pressure-sensitive adhesive tape of claim 1 wherein said unsaturated segment of said elastomer having a lower glass transition temperature than the acrylic copolymer comprises at least 50% by weight of the elastomer wherein said adhesive layer comprises from about 10 parts to about 25 parts of said hydrocarbon elastomer.

3. The pressure-sensitive adhesive tape of claim 1 wherein said hydrocarbon elastomer is selected from the group consisting of styrene-butadiene multiblock copolymers, and butadiene styrene copolymers.

4. A pressure-sensitive adhesive tape according to claim 1 wherein said adhesive layer comprises an acrylic copolymer of monomers containing

a) from about 60 parts to about 99 parts of an alkyl acrylate ester selected from the group consisting of isooctyl acrylate, isononyl acrylate, decyl acrylate, dodecyl acrylate, butyl acrylate, ethyl-hexyl acrylate and hexyl acrylate,

b) correspondingly from about 40 parts to about 1 part of a monoethylenically unsaturated polar copolymerizable monomer selected from the group consisting of acrylic acid, and N-vinylpyrrolidone.

5. A pressure-sensitive adhesive tape according to claim 4 wherein said adhesive layer comprises an acrylic copolymer of monomers containing

a) from about 80 parts to about 90 parts isooctyl acrylate and

b) correspondingly, from about 10 parts to about 20 parts acrylic acid.

6. A pressure-sensitive adhesive tape according to claim 1 further comprising a core layer.

7. A pressure-sensitive adhesive tape according to claim 6 wherein said core layer comprises a single-phase ultraviolet-radiation polymerized acrylic copolymer.

8. A pressure-sensitive adhesive tape having a core layer according to claim 7 wherein said single-phase ultraviolet-radiation polymerized acrylic copolymer comprises from about 95 parts to about 99 parts of said alkyl acrylate monomer, and correspondingly, from about 5 parts to about 1 part of said strongly polar copolymerizable monomer.

9. The pressure-sensitive adhesive tape of claim 6 wherein said core comprises a polymeric material selected from the group consisting of polyethylene, polypropylene, polyacrylates, neoprene, polyolefin, and polyurethane.

10. The pressure-sensitive adhesive tape of claim 1 wherein said adhesive layer further comprises a chain transfer agent.

Fig. 1

Fig. 2

Fig. 3

Fig. 4

Fig. 5

Fig. 6

*Fig. 7*

*Fig. 8*

Fig. 9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 044 166 (LOCTITE CORP.)<br>* Claims *<br>--- | 1-3 | C 09 J 7/02<br>C 09 J 133/08<br>C 09 J 151/04 |
| P,A | EP-A-0 303 430 (MINNESOTA MINING AND MANUFACTURING CO.)<br>* Claims; page 5, lines 31-39 *<br>--- | 1 | |
| D,A | EP-A-0 238 863 (W.R. GRACE AND CO.)<br>* Claims *<br>----- | 1 | |

TECHNICAL FIELDS SEARCHED (Int. Cl. 5)

C 08 L
C 09 J

The present search report has been drawn up for all claims

| Place of search | Date of completion of the search | Examiner |
|---|---|---|
| THE HAGUE | 05-10-1989 | DE LOS ARCOS Y VELAZQUEZ |

EPO FORM 1503 03.82 (P0401)